# EUROPEAN PATENT SPECIFICATION

(11) **EP 4 254 361 B1**
(45) Date of publication and mention of the grant of the patent: **16.09.2026**
(21) Application number: 23164516.9
(22) Date of filing: 28.03.2023
(51) Int. Cl.: G06V 20/58, G06V 20/56, B60W 30/09, B60W 40/06, G06V 10/80, G06V 20/70, G06V 10/62, G06V 10/22, G06V 10/25

(54) **A SYSTEM IN A VEHICLE FOR DETECTING ROAD ANOMALIES AND A METHOD THEREOF**
SYSTEM IN EINEM FAHRZEUG ZUR ERKENNUNG VON STRASSENANOMALIEN UND VERFAHREN DAFÜR
SYSTÈME DANS UN VÉHICULE POUR DÉTECTER DES ANOMALIES ROUTIÈRES ET PROCÉDÉ ASSOCIÉ

(30) Priority: 28.03.2022 IN 202241017977
(43) Date of publication of application: 04.10.2023
(73) Proprietor: TVS Motor Company Limited, 600006 Chennai (IN)
(72) Inventor: Adepu, Naresh, 600 006 Chennai (IN); Madugundo, Rajasekhar, 600 006 Chennai (IN); Prashanth, S. N., 600 006 Chennai (IN)
(74) Representative: Patentanwaltskanzlei Matschnig & Forsthuber OG

(56) References cited:
- JP-A- 2005 178 531
- RO-A2- 132 761
- US-A1- 2020 160 070
- US-A1- 2020 241 530
- US-A1- 2021 241 003
- US-A1- 2022 089 190

## Description

### FIELD OF THE INVENTION

The present invention generally relates to a system in a vehicle for detecting road anomalies and a method thereof.

### BACKGROUND OF THE INVENTION

Most vehicles on a day-to-day basis encounter different types of anomalies on the road. Such anomalies can be of a wide variety but can be broadly classified into four kinds i.e., bumps, potholes, diversions and inclinations / uneven road. It is important for a vehicle to carefully traverse such anomalies and preferably, avoid them altogether. Moving at great speeds over such anomalies may result in damaging suspension of the vehicle and in more unfortunate circumstances, may cause the vehicle to lose balance and cause an accident. While a driver of the vehicle can take reasonable precaution through visual observation of the road ahead, it may not always be possible in heavy traffic, or in low-light conditions. Further, it is not desirable to be only focussed on the contours and anomalies of the road as a driver ought to be aware of the vehicles behind and on either side of the vehicle being driven. Therefore, developing a suitable detection means for road anomalies is needed.

Existing solutions include tracking and identifying potholes with high resolution cameras which are expensive, bulky and take significant space in a vehicle. In other forms, additional sensors in the form of ultrasound sensors are required to be mounted on the vehicle which resultantly leads to an increase in cost, space and specialized mounting means. In another solution, GPS is used to track anomalies on the road. However, such results can be heavily unreliable because the authorities may repair the roads which won't be captured by the GPS and would result in creating false alarms. On the flipside, due to monsoon or degradation or any reason, a new anomaly is present which has not been captured by the GPS would result in the driver not being warned of the impending danger.

Thus, there is a need in the art for a system and a method in a vehicle for detecting road anomalies which can address at least the aforementioned problems and limitations.

The document US 2020/0160070 A1 discloses a method of identifying obstacles for the purpose of autonomous driving or providing driver assistance; including cropping an image based on a width, height and center of a first vehicle in the image to determine an image patch, estimating a 3D pose of the first vehicle based on inputting the image patch and the width, height and center of the first vehicle into a deep neural network, and, operating a second vehicle based on the estimated 3D pose.

Other systems and methods for obstacle detection in vehicular environments are described in US 2022/0089190 A1 and US 2020/0241530 A1; and US 2021/0241003 A1 and JP 2005-178531 A describe collecting information with regard to road geometry.

### SUMMARY OF THE INVENTION

In one aspect, the present invention is directed to a system in a vehicle for detecting road anomalies. The system includes one or more sensors, and a processor. The one or more sensors are configured to generate one or more images of a view in front of a vehicle. The processor is in communication with the one or more sensors. The processor is configured to receive the one or more images from the one or more sensors; detect a front moving vehicle in the one or more images; analyse motion of the front moving vehicle in comparison with an expected path of the front moving vehicle; and determine a form of the road anomaly based on the analysed motion of the front moving vehicle.

In an embodiment, the one or more sensors include one or more cameras or LiDAR sensors or a combination thereof.

In accordance with this aspect of the invention as claimed, the processor is configured to create a bounding box around a periphery of the front moving vehicle in the one or more images; find a centroid of the bounding box; analyse motion of the front moving vehicle by monitoring a shift in the centroid of the bounding box in comparison with an expected path of the centroid; and determine the form of the road anomaly by evaluating the shift in the centroid of the bounding box;
and the processor is further configured to determine, from the one or more images, whether one or more tail-lights of the front moving vehicle is turned ON as a consequence of an application of brakes; evaluate the shift in the centroid of the bounding box; and determine the form of the road anomaly based on status of the tail-lights and the shift in the centroid.

In an embodiment, the processor analyses motion of the front moving vehicle by means of an object tracking algorithm.

In an embodiment, the processor determines the form of the road anomaly by means of a time series series-based machine learning algorithm.

In an embodiment, the processor is configured to classify the front moving vehicle based on a predetermined class of vehicles.

In an embodiment, the processor is configured to generate an alert to notify a vehicle rider about the form of road anomaly ahead of the vehicle.

In an embodiment, the alert generated to notify the vehicle rider about the form of the road anomaly being provided by means of light indicators, sound indicators or haptic indicators or a combination thereof.

In an embodiment, the alert generated to notify the vehicle rider about the form of the road anomaly being sent to a wearable device 160 through a wireless network.

In an embodiment, the processor is configured to send a signal to a control unit to actuate brakes or throttle control or a combination thereof based on the form of the road anomaly.

In an embodiment, the road anomaly is determined to be a bump or a pothole when the centroid of the bounding box shifts along a vertical axis.

In an embodiment, the road anomaly is determined to be a diversion towards a different lane on the road when the centroid of the bounding box shifts along a horizontal axis.

In an embodiment, the road anomaly is determined to be an inclination on the road when the centroid of the bounding box shifts along both horizontal and vertical axes.

In an embodiment, the system is configured to operate when the vehicle exceeds a threshold speed.

In an embodiment, the processor is configured to detect the front moving vehicle in the one or more images based on a greater proximity of the vehicle with the front moving vehicle when compared to an other vehicle.

In an embodiment, the processor is configured to detect the front moving vehicle when the front moving vehicle is moving within a predetermined distance ahead of the vehicle and in a same lane as that of the vehicle.

In another aspect, the present invention is directed to a method for detecting road anomalies by a vehicle, the method includes the steps of generating, by one or more sensors in the vehicle, one or more images of a view in front of the vehicle; receiving, by a processor in the vehicle, the one or more images; detecting, by the processor, a front moving vehicle in the one or more images; analysing, by the processor, motion of the front moving vehicle in comparison with an expected path of the front moving vehicle; determining, by the processor, a form of the road anomaly based on the analysed motion of the front moving vehicle.

In accordance with this aspect of the invention as claimed, the method includes the steps of creating, by the processor, a bounding box around a periphery of the front moving vehicle in the one or more images; finding, by the processor, a centroid of the bounding box; analysing motion, by the processor, of the front moving vehicle by monitoring a shift in the centroid of the bounding box in comparison with an expected path of the centroid; and determining, by the processor, the form of the road anomaly by evaluating the shift in the centroid of the bounding box;
and the method further includes the steps of determining, by the processor, from the one or more images, whether one or more tail-lights of the front moving vehicle is turned ON as a consequence of an application of brakes; evaluating, by the processor, the shift in the centroid of the bounding box; and determining, the form of road anomaly based on status of the one or more tail-lights and the shift in the centroid.

In an embodiment, the method includes the steps of classifying, by the processor, the front moving vehicle based on a predetermined class of vehicles.

In an embodiment, the method includes the steps of generating, by the processor, an alert to notify a vehicle rider of the vehicle about the form of road anomaly.

In an embodiment, the method includes the steps of sending, by the processor, a signal to a control unit to actuate brakes or throttle control or a combination thereof based on the form of the road anomaly.

In an embodiment, the method includes the steps of determining, by the processor, the form of road anomaly as a bump or a pothole when the centroid of the bounding box shifts along a vertical axis.

In an embodiment, the method includes the steps of determining, by the processor, the form of road anomaly as a diversion towards a different lane on the road when the centroid of the bounding box shifts along a horizontal axis.

In an embodiment, the method includes the steps of determining, by the processor, the form of road anomaly as an inclination on the road when the centroid of the bounding box shifts along horizontal and vertical axes.

In an embodiment, the method includes the steps of determining a speed of the vehicle to be greater than a threshold speed, for receiving the images by the processor.

In an embodiment, the method includes the steps of detecting, by the processor, the front moving vehicle in the one or more images based on a greater proximity of the vehicle with the front moving vehicle when compared to an other vehicle.

In an embodiment, the method includes the steps of detecting, by the processor, the front moving vehicle when the front moving vehicle is moving within a predetermined distance ahead of the vehicle and in a same lane as that of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a system in a vehicle for detecting road anomalies in accordance with an embodiment of the present invention.
Figure 2 illustrates an image generated by sensors in the vehicle, in accordance with an embodiment of the present invention.
Figures 3 and 4 illustrate the vehicle following the front moving vehicle wherein the front moving vehicle is traversing a bump in accordance with an embodiment of the invention.
Figure 5 illustrates a functional view of the system when the front moving vehicle wherein the front moving vehicle is traversing a bump in accordance with an embodiment of the invention.
Figure 6 illustrates an image generated when the front moving vehicle traverses a pothole.
Figure 7 illustrates the vehicle following the front moving vehicle wherein the front moving vehicle is traversing a diversion in accordance with an embodiment of the invention.
Figure 8 illustrates an image generated when the front moving vehicle traverses an inclination.
Figures 9, 10 and 11 illustrate a method for detecting road anomalies by a vehicle in accordance with an embodiment of the invention.

### DETAILED DESCRIPTION OF THE INVENTION

Various features and embodiments of the present invention here will be discernible from the following further description thereof, set out hereunder.

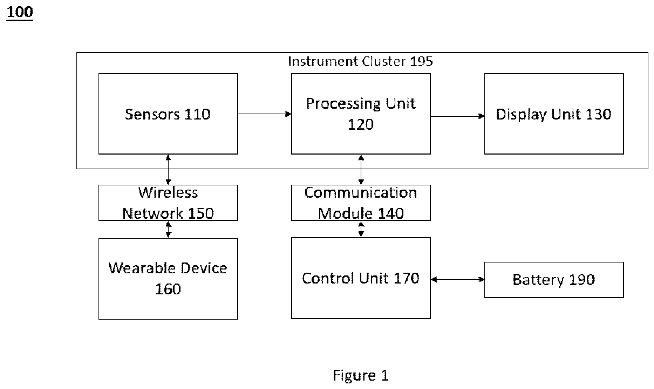

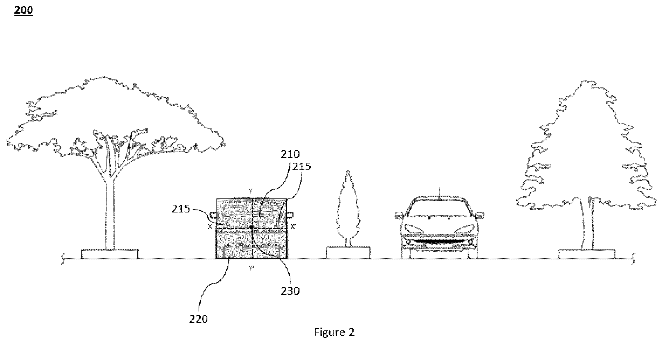

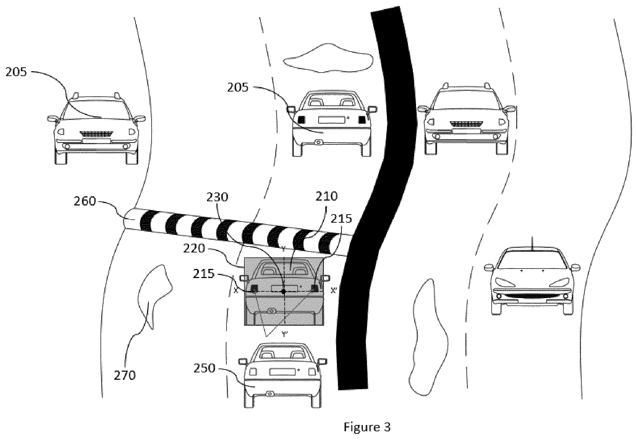

Figure 1 illustrates a system 100 in a vehicle 250 (as shown in Figure 3, 4 and 7) for detecting road anomalies 260, 270, 280, 290 in accordance with an embodiment of the present invention. The system includes sensors 110 configured to generate images of a view in front of the vehicle 250. The sensors 110 could be cameras or LiDAR sensors. The cameras can be either monocular cameras or stereo cameras. Further, the cameras can be configured to take images 200 (as shown in Figure 2 and Figure 3) in a predetermined frequency such as 10 frames per second or 60 frames per second. In an embodiment, the sensors 110 are provided in an instrument cluster 195. In another embodiment, the sensors 110 can be disposed or mounted anywhere on a body of the vehicle 250 that is convenient to generate images 200 of the view in front of the vehicle without any hindrance. Further, the sensors 110 are capable of generating the images 200 in low visibility conditions such as at night and during heavy rainfall or like weather conditions. In an embodiment, a single sensor 110, either a camera or a LiDAR can be used to generate the images 200. In another embodiment, multiple sensors 110 of same type or a combination of sensors 110 can be used to generate the images 200 and further process the images 200 in unison to produce greater depth or other photographic qualities essential for further processing.

The system 100 further includes a processing unit 120 in communication with the sensors 110. In an embodiment, the processing unit 120 communicates with the sensors 110 over a Controller Area Network (CAN) or a Local Interconnect Network (LIN) protocol. In an embodiment, the processor 120 is provided in the instrument cluster 195. In another embodiment, the processor 120 is provided in a main vehicle control unit (not shown). The processor 120 is configured to receive the images 200 generated by the sensors 110. In an embodiment, before the processor 120 begins to analyse the images 200, the images 200 are pre-processed to reduce unwanted distortion and noise. Reduction of noise is important for subsequent operations in the system 100 to be performed with greater accuracy and precision. Known digital image processing techniques are implemented to enhance the images 200 for subsequent analysis and operations.

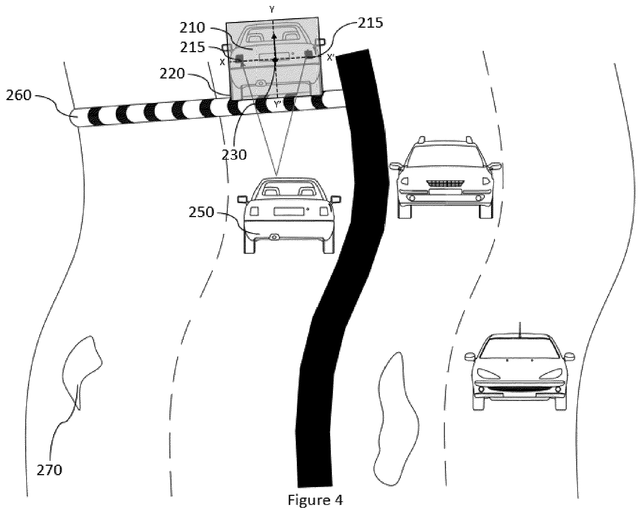

Figure 2 illustrates an image 200 generated by the sensors 110 of the vehicle 250 in accordance with an embodiment of the invention. Upon receiving the images 200, the processor 120 detects a front moving vehicle 210 in the images 200. On road, several vehicles will be moving ahead of the vehicle 250 on which the system 100 is deployed. The processor 120 differentiates the front moving vehicle 210 from other vehicles 205 (as shown in Figure 4) based on proximity of the vehicle 250 vis-à-vis the front moving vehicle 210 and the other vehicles 205. Inherently, the front moving vehicle 210 will have the greatest proximity with the vehicle 250. Further, the front moving vehicle 210 will be in a same lane as the vehicle 250. In an embodiment, the processor 120 is configured to detect the front moving vehicle 210 when the front moving vehicle 210 is moving within a predetermined distance ahead of the vehicle 250 and in a same lane as that of the vehicle 250. Consequently, vehicles far ahead from the vehicle 250 are not considered because such vehicles will provide information, if any, about an anomaly in the road which is far ahead and not immediate. In an embodiment, the predetermined distance is 30 metres. In an embodiment, proximity can be measured by estimating distance from the vehicle 250 in the images 200. Further, it may be noted that the processor 120, while detecting the front vehicle 210, does not take any other surrounding object into consideration because such objects do not provide any information about form of road anomaly. The surrounding objects include trees, incoming traffic, and vehicles in other lanes. In another embodiment, the images 200 can be correlated with sensory data obtained from proximity sensors (not shown) mounted on the vehicle 250. In an embodiment, the processor 120 implements an object tracking algorithm that includes variations of You Only Look Once (YOLO) algorithms that employ convolutional neural networks (CNNs) to detect the front moving vehicle 210 and analyse motion of the front moving vehicle 210.

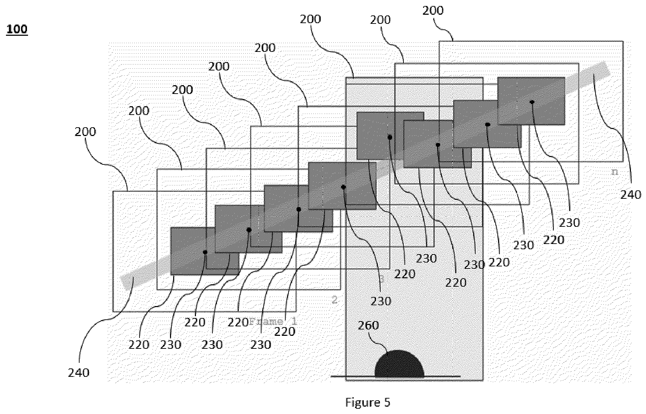

In an embodiment, the processor 120 is configured to create a bounding box 220 around a periphery of the front vehicle 210 in the images 200. In an embodiment, the bounding box 220 has a substantially rectangular profile that covers the entirety of the front moving vehicle 210 notwithstanding the bends or curves present therein. In another embodiment, the bounding box 220 is an accurate representation of the front moving vehicle 210 considering all bends, curvatures and characteristics in the body profile. Thereafter, the processor 120 is configured to find a centroid 230 of the bounding box 220. The centroid 230 is a geometric centre of the bounding box 220. The processor 120 is configured to analyse motion of the front moving vehicle 210 by monitoring a shift in the centroid 230 of the bounding box 220 in comparison with an expected path 240 (as shown in Figure 5) of the centroid 230. The expected path 240 of the centroid 230 is predetermined based on road data available through GPS. When there is no road anomaly present, the centroid 230 of the bounding box 220 would not deviate from the expected path 240 because a driver of the front moving vehicle 210 has no reason to manoeuvre in any direction away from the road ahead. However, in presence of a road anomaly, the front riding vehicle 210 would manoeuvre in an unexpected way, which in turn would cause a shift in the bounding box 220 that results in a shift of the centroid 230. Based on evaluation of the shift of the centroid 230 of the bounding box 220, the processor 120 is configured to determine a form of the road anomaly 260, 270, 280, 290.

In another embodiment, the processor 120 is configured to determine from the images 200 whether tail-lights 215 of the front moving vehicle 210 are turned ON as a consequence of an application of brakes in addition to the shift in centroid 230 of the bounding box 220. Based on evaluation of the shift of the centroid 230 of the bounding box 220 and the status of the tail-lights 215, the processor 120 is configured to determine a form of the road anomaly 260, 270, 280, 290.

Figure 3 and Figure 4 in conjunction with Figure 5 illustrate the vehicle 250 following the front moving vehicle 210 wherein the front moving vehicle 210 is traversing a bump 260 in accordance with an embodiment of the invention. The bump 260 is a form of road anomaly. When traversing the bump 260, the front moving vehicle 210 moves away from the ground which causes a shift in the bounding box 220 and consequently, the centroid 230 shifts vertically upwards along (Y-Y') direction thereby. An upward shift of the centroid 230 would indicate that the form of the road anomaly is the bump 260. Additionally, when approaching the bump 260, the driver would expectedly slow down by applying brakes, which in turn ON the tail-lights 215. The combination of the tail-lights 215 being turned ON and the centroid 230 shifting vertically upwards (Y-Y') would indicate that the form of the road anomaly is the bump 260. The processor 120 detects this shift in the centroid 230 in (Y-Y') direction from a series of the images 200 and determines that the road anomaly is a bump 260.

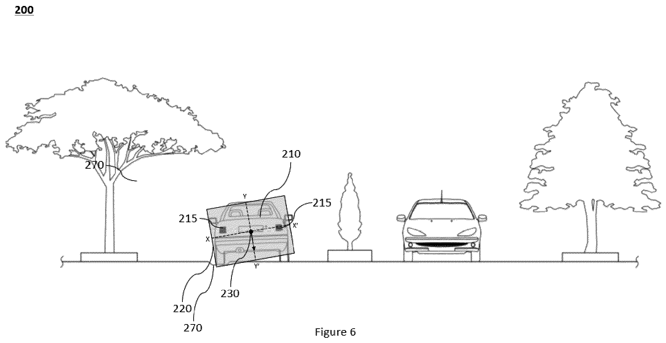

Figure 6 illustrates an image 200 generated when the front moving vehicle 210 traverses a pothole 270. The pothole 270 is a form of road anomaly. While traversing the pothole 270, the front moving vehicle 210 moves further into the ground which causes a shift in the bounding box 220 and consequently, the centroid 230 shifts vertically (Y-Y') downwards thereby. A downward shift of the centroid 230 would indicate that the form of the road anomaly is the pothole 270. Additionally, when approaching the pothole 270, the driver would expectedly slow down by applying brakes, which in turn ON the tail-lights 215. In an embodiment, the combination of the tail-lights 215 being turned ON and the centroid 230 shifting vertically downwards (Y-Y') would be processed by the processor 120 to indicate that the form of the road anomaly is the pothole 270. In some cases, the processor 120 will only depend on centroid 230 shift to identify the anomaly being a pothole 270.

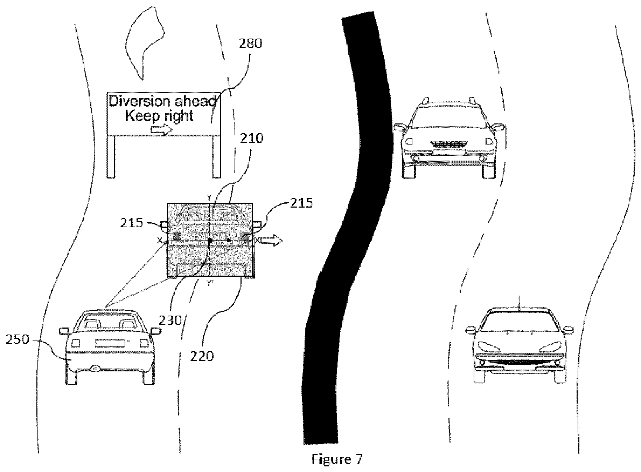

Figure 7 illustrates the vehicle 250 following the front moving vehicle 210 wherein the front moving vehicle 210 is traversing a diversion 280 in accordance with an embodiment of the invention. The diversion 280 is a form of a road anomaly that requires vehicles to divert to a different lane and continue on road due to certain difficulties ahead such as repair work being performed or an accident that has occurred. While traversing the diversion 280, the front moving vehicle 210 moves horizontally (X-X') on either left or right side directions which causes a shift in the bounding box 220 and consequently, the centroid 230 shifts horizontally (X-X') on either left or right side thereby. A horizontal (X-X') shift of the centroid 230 would indicate that the form of the road anomaly is the diversion 280. In some scenarios, a combination of tail light 215 indication and centroid 230 shift in (X-X') direction indicates that the road anomaly is a diversion 280.

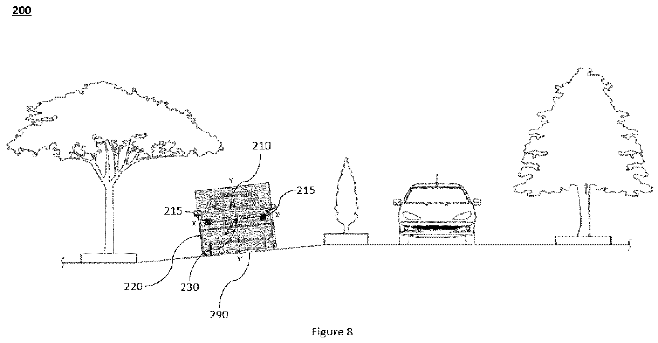

Figure 8 illustrates an image 200 generated when the front moving vehicle 210 traverses an inclination 290. The inclination 290 is a form of road anomaly. While traversing the inclination 290, the front moving vehicle 210 moves horizontally (X-X') as well along vertical (Y-Y') axes which causes a shift in the bounding box 220 and consequently, the centroid 230 shifts horizontally as well along vertical thereby. A horizontal (X-X') shift along with a vertical (Y-Y') shift of the centroid 230 in combination would indicate that the form of the road anomaly is the diversion 280.

In an embodiment, the processor 120 deploys a time series-based machine learning algorithm to determine the form of the road anomaly 260, 270, 280, 290. The processor 120 is previously trained and validated on such different shifts in centroids 230 and vehicle tail light 215 status before and after traversing road anomalies to determine the form of the road anomaly in real-time.

In an embodiment, the processor 120 is configured to classify the front moving vehicle 210 based on a predetermined class of vehicles. Classification may include classifying vehicles into different classes, such as, two-wheeler, four-wheeler, eight-wheeler and so on. Further, vehicles are classified to be in same lane vehicle, front vehicle, side vehicle, rear vehicle, incoming vehicle, stationary vehicle, mobile vehicle, etc. All such classifications are possible based on data obtained from the sensors 110 about surroundings of the vehicle 250, such as lane, dividers, trees, poles, other vehicles speeds, relative position of the vehicle 250 from them using ultrasonic means, etc. Further, the processor 120 is pre-trained and validated on classification of the vehicles and surroundings. Such classification can be helpful in understanding a threshold tolerance limit of deviation of the centroid 230. For example, a motorcycle rider within the same lane would keep moving in a horizontal (X-X') axis over a period of time to keep balance on two wheels. On the other hand, a heavy vehicle such as a truck would show minimal movement along the horizontal (X-X') axis when moving on a straight road. Therefore, it is pertinent to allow a degree of horizontal movement as threshold for certain classes of vehicles such as motorcycles wherein such movement would be deemed to be natural.

In an embodiment, the processor 120 is configured to generate an alert to notify a vehicle rider about the form of road anomaly ahead of the vehicle 250. The alert can be by means of light indicators on a dashboard of the vehicle 250, sound indicators or haptic indicators or a combination thereof. In an embodiment, the alert is displayed on a display unit 130 provided in the instrument cluster 195. In yet another embodiment, the alert is sent to a wearable device 160 worn by a rider through a wireless network 150.

In another embodiment, the processor 120 is configured to send a signal through a communication module 140 to a control unit 170 to actuate brakes or throttle control or a combination thereof based on the form of the road anomaly. If a bump 260, pothole 270 or diversion 280 is detected and the vehicle 250 is riding at a substantial speed, the processor 120 would automatically send the signal to the control unit 170 to actuate the brakes.

In an embodiment, the system 100 is configured to operate when the vehicle 250 exceeds a threshold speed. The processor 120 performs detection of the road anomalies based on front moving vehicle 210 behaviour when the front moving vehicle 210 is at a predetermined distance ahead of the vehicle 250 in the same lane of the vehicle 250 and also the speed of the vehicle 250 is greater than the threshold speed. In an embodiment, the threshold speed is 30 kmph.

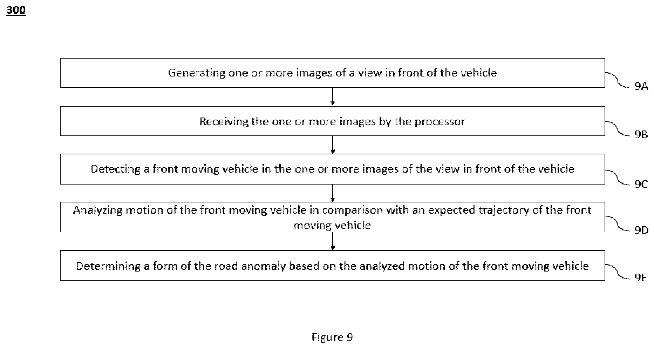

Figure 9 illustrates a method 300 for detecting road anomalies 260, 270, 280, 290 by a vehicle 250 in accordance with an embodiment of the invention. The method 300 includes the steps of generating 9A one or more images 200 of a view in front of the vehicle 250. The images 200 are generated by sensors 110 in the vehicle 250. Thereafter, the method 300 includes a processor 120 in the vehicle 250 receiving 9B the images 200. The method 300 includes the step of processor 120 detecting 9C a front moving vehicle 210 in the one or more images 200. Further, the method 300 includes the step of analysing 9D, by the processor 120, motion of the front moving vehicle 210 in comparison with an expected path 240 of the front moving vehicle 210. The method 300 includes the step of determining 9E a form of the road anomaly 260, 270, 280, 290 based on the analysed motion of the front moving vehicle 240. The determination of the form of the road anomaly 260, 270, 280, 290 is done by the processor 120.

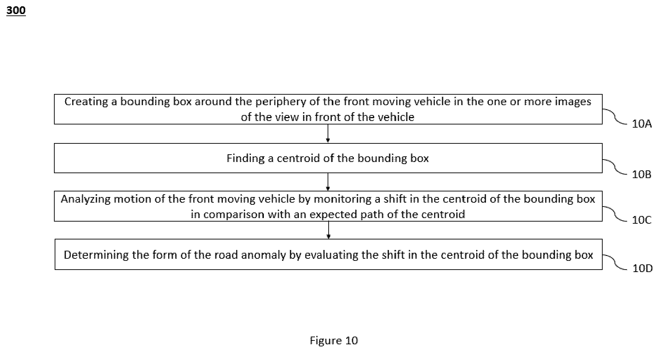

Figure 10 illustrates the method 300 for detecting road anomalies 260, 270, 280, 290 by the vehicle 250 in accordance with another embodiment of the invention. The method 300 includes the step of creating 10A, by the processor 120, a bounding box 220 around a periphery of the front moving vehicle 210 in the images 200. Thereafter, the method 300 includes the step of finding 10B, by the processor 120, a centroid 230 of the bounding box 220. At step 10C, the processor 120 performs the function of analysing motion of the front moving vehicle 210 by monitoring 10C a shift in the centroid 230 of the boundi.ng box 220 in comparison with an expected path 240 of the centroid 230. The method 300 at step 10D involves determining the form of the road anomaly 260, 270, 280, 290 by evaluating the shift in the centroid 230 of the bounding box 220.

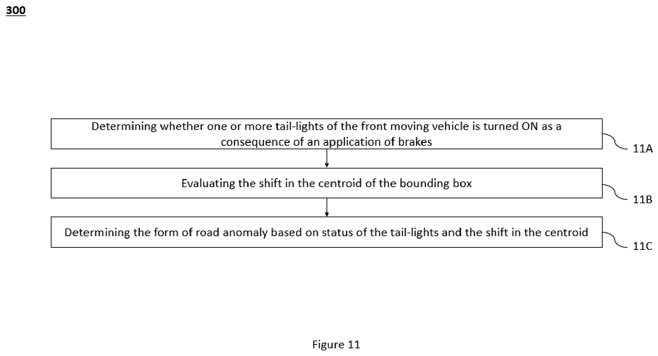

Figure 11 illustrates the method 300 for detecting road anomalies 260, 270, 280, 290 by a vehicle 250 in accordance with an embodiment of the invention. The method 300 includes the steps of at least one of determining 11A, by the processor 120, from the images 200, whether tail-lights 215 of the front moving vehicle 210 is turned ON as a consequence of an application of brakes. Thereafter, evaluating 11B, by the processor 120, the shift in the centroid 230 of the bounding box 220; and determining 11C, the form of road anomaly 260, 270, 280, 290 based on status of the tail-lights 215 and the shift in the centroid 230.

The method 300 includes the steps of classifying, by the processor 120, the front moving vehicle 210 based on a predetermined class of vehicles.

The method 300 includes the steps of detecting, by the processor 120, the front moving vehicle 210 in the images 200 based on a greater proximity of the vehicle 250 with the front moving vehicle 210 when compared to an other vehicle 205.

The method 300 includes the steps of detecting, by the processor 120, the front moving vehicle 210 when the front moving vehicle 210 is moving within a predetermined distance ahead of the vehicle 250 and in a same lane as that of the vehicle 250.

The method 300 includes the steps of generating, by the processor 120, an alert to notify a vehicle rider of the vehicle 250 about the form of road anomaly.

The method 300 includes the steps of: sending, by the processor 120, a signal to a control unit 170 to actuate brakes or throttle control or a combination thereof based on the form of the road anomaly.

The method 300 includes the steps of determining, by the processor 120, the form of road anomaly as a bump 260 or a pothole 270 when the centroid 230 of the bounding box 220 shifts along a vertical (Y-Y') axis.

The method 300 includes the steps of: determining, by the processor 120, the form of road anomaly as a diversion 280 towards a different lane on the road when the centroid 230 of the bounding box 220 shifts along a horizontal (X-X') axis.

The method 300 includes the steps of determining, by the processor 120, the form of road anomaly as an inclination 290 on the road when the centroid 230 of the bounding box 220 shifts along horizontal (X-X') and vertical (Y-Y') axes.

The method 300 includes the steps of determining a speed of the vehicle 250 to be greater than a threshold speed, for receiving the images 200 by the processor 120.

Advantageously, the present invention discloses a system in a vehicle for detecting road anomalies wherein the system includes sensors and a processor in communication with the camera. The processor is configured to analyse motion of a front moving vehicle in comparison with an expected path of the front moving vehicle and determine a form of road anomaly such as a bump, a pothole, a diversion or an inclination. The system does not require high resolution, specialized cameras and can operate with widely available cameras thereby being cheaper to implement. Further, the system does not require additional specialized sensors to determine the form of road anomaly. Finally, the system operates in real-time basis. Therefore, every anomaly that the front moving vehicle encounters, some of which may be very recent are accounted for by the system. So, discrepancies in road anomaly detection and alert based on GPS may be averted.

While the present invention has been described with respect to certain embodiments, it will be apparent to those skilled in the art that various changes and modification may be made without departing from the scope of the invention as defined in the following claims.

## Claims

1. A system (100) in a vehicle (250) for detecting road anomalies (260, 270, 280, 290), the system (100) comprising:
one or more sensors (110) being configured to generate one or more images (200) of a view in front of the vehicle (250); and
a processor (120) in communication with the one or more sensors (110), the processor (120) being configured to:
receive the one or more images (200) from the one or more sensors (110);
detect a front moving vehicle (210) in the one or more images (200);
create a bounding box (220) around a periphery of the front moving vehicle (210) in the one or more images (200);
find a centroid (230) of the bounding box (220);
analyse motion of the front moving vehicle (210) by monitoring a shift in the centroid (230) of the bounding box (220) in comparison with an expected path (240) of the centroid of the front moving vehicle (210); and
determine a form of the road anomaly (260, 270, 280, 290) by evaluating the shift in the centroid (230) of the bounding box (220) based on the analysed motion of the front moving vehicle (240),
**characterized in that** the processor is further configured to:
determine, from the one or more images (200), whether one or more tail-lights (215) of the front moving vehicle (210) is turned ON as a consequence of an application of brakes; and
evaluate the shift in the centroid (230) of the bounding box (220); and
determine the form of the road anomaly (260, 270, 280, 290) based on status of the tail-lights (215) and the shift in the centroid (230).

2. The system (100) as claimed in claim 1, wherein the processor (120) analyses motion of the front moving vehicle (210) by means of an object tracking algorithm,
wherein the processor (120) determines the form of the road anomaly (260, 270, 280, 290) by means of a time series-based machine learning algorithm,
wherein the processor (120) is configured to send a signal to a control unit (170) to actuate brakes or throttle control or a combination thereof based on the form of the road anomaly (260, 270, 280, 290).

3. The system (100) as claimed in claim 1, wherein the processor (120) is configured to classify the front moving vehicle (210) based on a predetermined class of vehicles,
wherein the processor (120) is configured to detect the front moving vehicle (210) in the one or more images (200) based on a greater proximity of the vehicle (250) with the front moving vehicle (210) when compared to an other vehicle (205),
wherein the processor (120) is configured to detect the front moving vehicle (210) when the front moving vehicle (210) is moving within a predetermined distance ahead of the vehicle (250) and in a same lane as that of the vehicle (250).

4. The system (100) as claimed in claim 1, wherein the processor (120) is configured to generate an alert to notify a vehicle rider about the form of road anomaly (260, 270, 280, 290) ahead of the vehicle (250),
wherein the alert generated to notify the vehicle rider about the form of the road anomaly (260, 270, 280, 290) being provided by means of light indicators, sound indicators or haptic indicators or a combination thereof,
wherein the alert generated to notify the vehicle rider about the form of the road anomaly (260, 270, 280, 290) being sent to a wearable device (160) through a wireless network (150).

5. The system (100) as claimed in claim 1, wherein the road anomaly is determined to be a bump (260) or a pothole (270) when the centroid (230) of the bounding box (220) shifts along a vertical (Y-Y') axis
wherein the road anomaly is determined to be a diversion (280) towards a different lane on the road when the centroid (230) of the bounding box (220) shifts along a horizontal (X-X') axis
wherein the road anomaly is determined to be an inclination (290) on the road when the centroid (230) of the bounding box (220) shifts along both horizontal (X-X') and vertical (Y-Y') axis.

6. The system (100) as claimed in claim 1 is configured to operate when the vehicle (250) exceeds a threshold speed.

7. A method (300) for detecting road anomalies (260, 270, 280, 290) by a vehicle (250), the method (300) comprising the steps of:
generating (9A), by one or more sensors (110) in the vehicle (250), one or more images (200) of a view in front of the vehicle (250);
receiving (9B), by a processor (120) in the vehicle (250), the one or more images (200);
detecting (9C), by the processor (120), a front moving vehicle (210) in the one or more images (200);
analysing (9D), by the processor (120), motion of the front moving vehicle (210) in comparison with an expected path (240) of the front moving vehicle (210);
determining (9E), by the processor (120), a form of the road anomaly (260, 270, 280, 290) based on the analysed motion of the front moving vehicle (210);
creating (10A), by the processor (120), a bounding box (220) around a periphery of the front moving vehicle (210) in the one or more images (200);
finding (10B), by the processor (120), a centroid (230) of the bounding box (220);
analysing motion (10C), by the processor (120), of the front moving vehicle (210) by monitoring (10C) a shift in the centroid (230) of the bounding box (220) in comparison with an expected path (240) of the centroid (230);
determining (10D), by the processor (120), the form of the road anomaly (260, 270, 280, 290) by evaluating the shift in the centroid (230) of the bounding box (220);
**characterized in that**:
determining (11A), by the processor (120), from the one or more images (200), whether one or more tail-lights (215) of the front moving vehicle (210) is turned ON as a consequence of an application of brakes;
evaluating (11B), by the processor (120), the shift in the centroid (230) of the bounding box (220); and
determining (11C), the form of road anomaly (260, 270, 280, 290) based on status of the one or more tail-lights (215) and the shift in the centroid (230).

8. The method (300) as claimed in claim 7, further comprising the steps of:
classifying, by the processor (120), the front moving vehicle (210) based on a predetermined class of vehicles,
detecting, by the processor (120), the front moving vehicle (210) in the one or more images (200) based on a greater proximity of the vehicle (250) with the front moving vehicle (210) when compared to an other vehicle (205),
detecting, by the processor (120), the front moving vehicle (210) when the front moving vehicle (210) is moving within a predetermined distance ahead of the vehicle (250) and in a same lane as that of the vehicle (250).

9. The method (300) as claimed in claim 7, further comprising the steps of:
generating, by the processor (120), an alert to notify a vehicle rider of the vehicle (250) about the form of road anomaly,
sending, by the processor (120), a signal to a control unit (170) to actuate brakes or throttle control or a combination thereof based on the form of the road anomaly.

10. The method (300) as claimed in claim 7, further comprising the steps of:
determining, by the processor ( 120), the form of road anomaly as a bump (260) or a pothole (270) when the centroid (230) of the bounding box (220) shifts along a vertical (Y-Y') axis,
determining, by the processor (120), the form of road anomaly as a diversion (280) towards a different lane on the road when the centroid (230) of the bounding box (220) shifts along a horizontal (X-X') axis,
determining, by the processor (120), the form of road anomaly as an inclination (290) on the road when the centroid (230) of the bounding box (220) shifts along horizontal (X-X') and vertical (Y-Y') axis.

11. The method (300) as claimed in claim 7, further comprising the steps of: determining a speed of the vehicle (250) to be greater than a threshold speed, for receiving the images (200) by the processor (120).

## Patentansprüche

1. System (100) in einem Fahrzeug (250) zur Erkennung von Straßenanomalien (260, 270, 280, 290), wobei das System (100) aufweist:
einen oder mehrere Sensoren (110), eingerichtet zum Erzeugen eines oder mehrerer Bilder (200) einer Sicht vor dem Fahrzeug (250), und
einen Prozessor (120) in Kommunikationsverbindung mit dem bzw. den Sensoren (110),
wobei der Prozessor (120) eingerichtet ist zum:
Empfangen des bzw. der Bilder (200) von dem bzw. den Sensoren (110);
Erkennen eines vorausfahrenden Fahrzeugs (210) in dem bzw. den Bildern (200);
Erzeugen eines Begrenzungsrahmens (220) um einen Randbereich des vorausfahrenden Fahrzeugs (210) in dem bzw. den Bildern (200);
Bestimmen eines Schwerpunkts (230) des Begrenzungsrahmens (220);
Analysieren der Bewegung des vorausfahrenden Fahrzeugs (210) durch Überwachen einer Verschiebung des Schwerpunkts (230) des Begrenzungsrahmens (220) im Vergleich zu einer erwarteten Bahn (240) des Schwerpunkts des vorausfahrenden Fahrzeugs (210); und
Ermitteln einer Form der Straßenanomalie (260, 270, 280, 290) durch Auswerten der Verschiebung des Schwerpunkts (230) des Begrenzungsrahmens (220) aufgrund der analysierten Bewegung des vorausfahrenden Fahrzeugs (240),
**dadurch gekennzeichnet, dass** der Prozessor des Weiteren eingerichtet ist zum:
Ermitteln aus dem bzw. den Bildern (200), ob eine oder mehrere Rückleuchten (215) des vorausfahrenden Fahrzeugs (210) infolge einer Bremsbetätigung eingeschaltet sind; und
Auswerten der Verschiebung des Schwerpunkts (230) des Begrenzungsrahmens (220); und
Ermitteln der Form der Straßenanomalie (260, 270, 280, 290) aufgrund des Zustands der Rückleuchten (215) und der Verschiebung des Schwerpunkts (230).

2. System (100) nach Anspruch 1, wobei der Prozessor (120) die Bewegung des vorausfahrenden Fahrzeugs (210) mithilfe eines Objektverfolgungsalgorithmus analysiert,
wobei der Prozessor (120) die Form der Straßenanomalie (260, 270, 280, 290) mithilfe eines zeitreihen-basierten Algorithmus maschinellen Lernens ermittelt,
wobei der Prozessor (120) dazu eingerichtet ist, ein Signal an eine Steuereinheit (170) zu senden, um die Bremsen oder das Gaspedal oder eine Kombination davon aufgrund der Form der Straßenanomalie (260, 270, 280, 290) zu betätigen.

3. System (100) nach Anspruch 1, wobei der Prozessor (120) dazu eingerichtet ist, das vorausfahrende Fahrzeug (210) aufgrund einer vorgegebenen Klasse von Fahrzeugen zu klassifizieren,
wobei der Prozessor (120) dazu eingerichtet ist, das vorausfahrende Fahrzeug (210) in dem bzw. den Bildern (200) aufgrund einer größeren Nähe des Fahrzeugs (250) zum vorausfahrenden Fahrzeug (210) im Vergleich zu einem anderen Fahrzeug (205) zu erkennen,
wobei der Prozessor (120) dazu eingerichtet ist, das vorausfahrende Fahrzeug (210) zu erkennen, wenn das vorausfahrende Fahrzeug (210) sich in einem vorbestimmten Abstand vor dem Fahrzeug (250) und auf derselben Fahrspur wie das Fahrzeug (250) bewegt.

4. System (100) nach Anspruch 1, wobei der Prozessor (120) dazu eingerichtet ist, eine Warnmeldung zum In-Kenntnis-Setzen des Fahrzeugfahrer über die Form der Straßenanomalie (260, 270, 280, 290) vor dem Fahrzeug (250) zu erzeugen,
wobei die Warnmeldung zum In-Kenntnis-Setzen des Fahrzeugfahrer über die Form der Straßenanomalie (260, 270, 280, 290) mittels Lichtsignalen, akustischen Signalen oder haptischen Signalen oder einer Kombination davon geliefert wird,
wobei die Warnmeldung zum In-Kenntnis-Setzen des Fahrzeugfahrer über die Form der Straßenanomalie (260, 270, 280, 290) über ein drahtloses Netzwerk (150) an ein tragbares Gerät (160) gesendet wird.

5. System (100) nach Anspruch 1, wobei die Straßenanomalie als Unebenheit (260) oder Schlagloch (270) beurteilt wird, wenn der Schwerpunkt (230) des Begrenzungsrahmens (220) sich entlang einer vertikalen Achse (Y-Y') verschiebt
wobei die Straßenanomalie als Umleitung (280) auf eine andere Fahrspur der Straße beurteilt wird, wenn der Schwerpunkt (230) des Begrenzungsrahmens (220) sich entlang einer horizontalen (X-X')-Achse verschiebt
wobei die Straßenanomalie als Neigung (290) auf der Straße beurteilt wird, wenn der Schwerpunkt (230) des Begrenzungsrahmens (220) sich sowohl entlang der horizontalen (X-X') als auch der vertikalen (Y-Y') Achse verschiebt.

6. System (100) nach Anspruch 1, welches zur Tätigkeit, wenn das Fahrzeug (250) einen Schwellwert der Geschwindigkeit überschreitet, eingerichtet ist.

7. Verfahren (300) zur Erkennung von Straßenanomalien (260, 270, 280, 290) durch ein Fahrzeug (250), wobei das Verfahren (300) die Schritte umfasst zum:
Erzeugen (9A) eines oder mehrerer Bilder (200) einer Sicht vor dem Fahrzeug (250) durch einen oder mehrere Sensoren (110) im Fahrzeug (250);
Empfangen (9B) des bzw. der Bilder (200) durch einen Prozessor (120) im Fahrzeug (250);
Erkennen (9C) eines vorausfahrenden Fahrzeugs (210) in dem bzw. den Bildern (200) durch den Prozessor (120);
Analysieren (9D) der Bewegung des vorausfahrenden Fahrzeugs (210) durch den Prozessor (120) im Vergleich zu einer erwarteten Fahrbahn (240) des vorausfahrenden Fahrzeugs (210);
Ermitteln (9E) einer Form der Straßenanomalie (260, 270, 280, 290) durch den Prozessor (120) aufgrund der analysierten Bewegung des vorausfahrenden Fahrzeugs (210);
Erzeugen (10A) eines Begrenzungsrahmens (220) um einen Randbereich des vorausfahrenden Fahrzeugs (210) in dem bzw. den Bildern (200) durch den Prozessor (120);
Bestimmen (10B) eines Schwerpunkts (230) des Begrenzungsrahmens (220) durch den Prozessor (120);
Analysieren (10C) der Bewegung (10C) des vorausfahrenden Fahrzeugs (210) durch den Prozessor (120) durch Überwachen (10C) einer Verschiebung des Schwerpunkts (230) des Begrenzungsrahmens (220) im Vergleich zu einer erwarteten Bahn (240) des Schwerpunkts (230);
Ermitteln (10D) der Form der Straßenanomalie (260, 270, 280, 290) durch den Prozessor (120) durch Auswerten der Verschiebung des Schwerpunkts (230) des Begrenzungsrahmens (220);
**dadurch gekennzeichnet, dass**:
Ermitteln (11A) durch den Prozessor (120) aus dem bzw. den Bildern (200), ob eine oder mehrere Rückleuchten (215) des vorausfahrenden Fahrzeugs (210) infolge einer Bremsbetätigung eingeschaltet sind;
Auswerten (11B) der Verschiebung des Schwerpunkts (230) des Begrenzungsrahmens (220) durch den Prozessor (120); und
Ermitteln (11C) der Form der Straßenanomalie (260, 270, 280, 290) aufgrund des Zustands der Rückleuchte(n) (215) und der Verschiebung des Schwerpunkts (230).

8. Verfahren (300) nach Anspruch 7, des Weiteren umfassend die Schritte zum:
Klassifizieren des vorausfahrenden Fahrzeugs (210) durch den Prozessor (120) aufgrund einer vorgegebenen Klasse von Fahrzeugen,
Erkennen des vorausfahrenden Fahrzeugs (210) durch den Prozessor (120) in dem bzw. den Bildern (200) aufgrund einer größeren Nähe des Fahrzeugs (250) zum vorausfahrenden Fahrzeug (210) im Vergleich zu einem anderen Fahrzeug (205),
Erkennen des vorausfahrenden Fahrzeugs (210) durch den Prozessor (120), wenn das vorausfahrende Fahrzeug (210) sich in einem vorbestimmten Abstand vor dem Fahrzeug (250) und auf derselben Fahrspur wie das Fahrzeug (250) bewegt.

9. Verfahren (300) nach Anspruch 7, des Weiteren umfassend die Schritte zum:
Erzeugen einer Warnmeldung durch den Prozessor (120), um den Fahrer des Fahrzeugs (250) über die Form der Straßenanomalie in Kenntnis zu setzen,
Senden eines Signals an eine Steuereinheit (170) zum Betätigen von Bremsen oder des Gaspedals oder eine Kombination davon aufgrund der Form der Straßenanomalie durch den Prozessor (120).

10. Verfahren (300) nach Anspruch 7, des Weiteren umfassend die Schritte zum:
Beurteilen der Form der Straßenanomalie als Unebenheit (260) oder Schlagloch (270) durch den Prozessor (120), wenn der Schwerpunkt (230) des Begrenzungsrahmens (220) sich entlang einer vertikalen Achse (Y-Y') verschiebt,
Beurteilen der Form der Straßenanomalie durch den Prozessor (120) als Umleitung (280) auf eine andere Fahrspur auf der Straße, wenn der Schwerpunkt (230) des Begrenzungsrahmens (220) sich entlang einer horizontalen (X-X')-Achse verschiebt,
Beurteilen der Form der Straßenanomalie durch den Prozessor (120) als Neigung (290) auf der Straße, wenn der Schwerpunkt (230) des Begrenzungsrahmens (220) sich entlang der horizontalen (X-X') und vertikalen (Y-Y') Achse verschiebt.

11. Verfahren (300) nach Anspruch 7, des Weiteren umfassend die Schritte zum: Ermitteln einer Geschwindigkeit des Fahrzeugs (250) als größer als ein Schwellwert der Geschwindigkeit, zum Empfangen der Bilder (200) durch den Prozessor (120).

## Revendications

1. Système (100) dans un véhicule (250) pour détecter des anomalies routières (260, 270, 280, 290), le système (100) comprenant :
un ou plusieurs capteurs (110) configurés pour générer une ou plusieurs images (200) d'une vue située à l'avant du véhicule (250), et
un processeur (120) en communication avec ledit ou lesdites capteurs (110) ;
le processeur (120) étant configuré pour :
recevoir une ou plusieurs images (200) provenant dudit ou desdites capteurs (110) ;
détecter, dans ladite ou lesdites images (200), un véhicule qui précède (210) ;
créer une boîte d'encombrement (220) autour du périmètre du véhicule qui précède (210) dans ladite ou lesdites images (200) ;
localiser un centroïde (230) de la boîte d'encombrement (220) ;
analyser le mouvement du véhicule qui précède (210) en surveillant un déplacement du centroïde (230) de la boîte d'encombrement (220) par rapport à une trajectoire attendue (240) du centroïde du véhicule qui précède (210) ; et
déterminer la nature de l'anomalie routière (260, 270, 280, 290) en évaluant le déplacement du centroïde (230) de la boîte d'encombrement (220) sur la base du mouvement analysé du véhicule qui précède (240),
**caractérisé en ce que** le processeur est en outre configuré pour :
déterminer, à partir de ladite ou lesdites images (200), si un ou plusieurs feux arrière (215) du véhicule qui précède (210) est/sont allumés à la suite d'un freinage ; et
évaluer le déplacement du centroïde (230) de la boîte d'encombrement (220) ; et
déterminer la nature de l'anomalie routière (260, 270, 280, 290) sur la base de l'état des feux arrière (215) et du déplacement du centroïde (230).

2. Système (100) selon la revendication 1, dans lequel le processeur (120) analyse le mouvement du véhicule qui précède (210) à l'aide d'un algorithme de suivi d'objets,
le processeur (120) déterminant la nature de l'anomalie routière (260, 270, 280, 290) à l'aide d'un algorithme d'apprentissage automatique basé sur des séries chronologiques,
le processeur (120) étant configuré pour envoyer un signal à une unité de commande (170) afin d'actionner les freins ou la commande d'accélération, ou une combinaison des deux, en fonction de la nature de l'anomalie routière (260, 270, 280, 290).

3. Système (100) selon la revendication 1, dans lequel le processeur (120) est configuré pour classer le véhicule qui précède (210) en fonction d'une classe prédéterminée de véhicules,
le processeur (120) étant configuré pour détecter le véhicule qui précède (210) dans une ou plusieurs images (200) en fonction d'une plus grande proximité du véhicule (250) par rapport au véhicule qui précède (210) en comparaison d'un autre véhicule (205),
le processeur (120) étant configuré pour détecter le véhicule qui précède (210) lorsque celui-ci se déplace à une distance prédéterminée à l'avant du véhicule (250) et sur la même voie que celle du véhicule (250).

4. Système (100) selon la revendication 1, dans lequel le processeur (120) est configuré pour générer une alerte afin d'informer le conducteur du véhicule de la nature de l'anomalie routière (260, 270, 280, 290) située devant le véhicule (250),
l'alerte générée pour informer le conducteur du véhicule de la nature de l'anomalie routière (260, 270, 280, 290) étant fournie au moyen d'indicateurs lumineux, sonores ou haptiques, ou d'une combinaison de ceux-ci,
l'alerte générée pour informer le conducteur du véhicule de la nature de l'anomalie routière (260, 270, 280, 290) étant transmise à un appareil portable (160) via un réseau sans fil (150).

5. Système (100) selon la revendication 1, dans lequel l'anomalie routière est identifiée comme étant une bosse (260) ou un nid-de-poule (270) lorsque le centroïde (230) de la boîte d'encombrement (220) se déplace le long d'un axe vertical (Y-Y')
dans lequel l'anomalie routière est identifiée comme une déviation (280) vers une autre voie de la route lorsque le centroïde (230) de la boîte d'encombrement (220) se déplace le long d'un axe horizontal (X-X')
dans lequel l'anomalie routière est identifiée comme une pente (290) sur la route lorsque le centroïde (230) de la boîte d'encombrement (220) se déplace à la fois le long des axes horizontal (X-X') et vertical (Y-Y').

6. Système (100) selon la revendication 1 est configuré pour fonctionner lorsque le véhicule (250) dépasse une vitesse seuil.

7. Procédé (300) de détection d'anomalies routières (260, 270, 280, 290) par un véhicule (250), le procédé (300) comprenant les étapes de :
générer (9A), à l'aide d'un ou plusieurs capteurs (110) situés dans le véhicule (250), une ou plusieurs images (200) d'une vue située à l'avant du véhicule (250) ;
recevoir (9B), par un processeur (120) situé dans le véhicule (250), ladite ou lesdites images (200) ;
détecter (9C), par le processeur (120), un véhicule qui précède (210) dans ladite ou lesdites images (200) ;
analyser (9D), par le processeur (120), le mouvement du véhicule qui précède (210) par rapport à une trajectoire attendue (240) du véhicule qui précède (210) ;
déterminer (9E), par le processeur (120), une nature de l'anomalie routière (260, 270, 280, 290) sur la base du mouvement analysé du véhicule qui précède (210) ;
créer (10A), par le processeur (120), une boîte d'encombrement (220) autour du périmètre du véhicule qui précède (210) dans ladite ou lesdites images (200) ;
déterminer (10B), par le processeur (120), un centroïde (230) de la boîte d'encombrement (220) ;
analyser (10C), par le processeur (120), le mouvement du véhicule qui précède (210) en surveillant (10C) un déplacement du centroïde (230) de la boîte d'encombrement (220) par rapport à une trajectoire attendue (240) du centroïde (230) ;
déterminer (10D), par le processeur (120), la nature de l'anomalie routière (260, 270, 280, 290) en évaluant le déplacement du centroïde (230) de la boîte d'encombrement (220) ;
**caractérisé en ce que** :
déterminer (11A), par le processeur (120) à partir de ladite ou lesdites images (200), si un ou plusieurs feux arrière (215) du véhicule qui précède (210) sont allumés à la suite d'un freinage ;
évaluer (11B), par le processeur (120), le déplacement du centroïde (230) de la boîte d'encombrement (220) ; et
déterminer (11C) la nature de l'anomalie routière (260, 270, 280, 290) en fonction de l'état dudit ou desdits feux arrière (215) et du déplacement du centroïde (230).

8. Procédé (300) selon la revendication 7, comprenant en outre les étapes de :
classer, par le processeur (120), le véhicule qui précède (210) en fonction d'une classe prédéterminée de véhicules,
détecter, par le processeur (120), le véhicule qui précède (210) dans ladite ou lesdites images (200) en fonction d'une plus grande proximité du véhicule (250) avec le véhicule qui précède (210) en comparaison d'un autre véhicule (205),
détecter, à l'aide du processeur (120), le véhicule qui précède (210) lorsque le véhicule qui précède (210) se déplace à une distance prédéterminée devant le véhicule (250) et sur la même voie que celle du véhicule (250).

9. Procédé (300) selon la revendication 7, comprenant en outre les étapes de :
générer, par le processeur (120), une alerte pour informer le conducteur du véhicule (250) de la nature de l'anomalie routière,
envoyer, par le processeur (120), un signal à une unité de commande (170) pour actionner les freins ou la commande d'accélération, ou une combinaison des deux, en fonction de la nature de l'anomalie routière.

10. Procédé (300) selon la revendication 7, comprenant en outre les étapes de :
déterminer, par le processeur (120), la nature de l'anomalie routière (bosse (260) ou nid-de-poule (270)) lorsque le centroïde (230) de la boîte d'encombrement (220) se déplace le long d'un axe vertical (Y-Y'),
déterminer, à l'aide du processeur (120), la nature de l'anomalie routière comme étant une déviation (280) vers une autre voie de la route lorsque le centroïde (230) de la boîte d'encombrement (220) se déplace le long d'un axe horizontal (X-X'),
déterminer, à l'aide du processeur (120), la nature de l'anomalie routière comme une pente (290) de la route lorsque le centroïde (230) de la boîte d'encombrement (220) se déplace le long des axes horizontal (X-X') et vertical (Y-Y').

11. Procédé (300) selon la revendication 7, comprenant en outre les étapes de : déterminer que la vitesse du véhicule (250) est supérieure à une vitesse seuil, pour que le processeur (120) reçoive les images (200).
